# EUROPEAN PATENT APPLICATION

(11) **EP 1 553 325 A2**
(43) Date of publication of application: **13.07.2005**
(21) Application number: 05003723.3
(22) Date of filing: 15.05.2001
(51) Int. Cl.: F16H 9/18

(54) **Motor-converter with plate-type friction clutch**

(30) Priority: 23.05.2000 IT RE20000019 U; 06.03.2001 IT RE20010008 U
(62) Divisional of application: 01111747.0
(71) Applicant: STILFRENI S.r.l., 42030 Viano (Reggio Emilia) (IT); CORAM S.p.A., 25033 Cologne (Brescia) (IT)
(72) Inventor: Piantoni, Angelo, 25033 Cologne (Brescia) (IT)
(74) Representative: Lecce, Giovanni

(57) **Abstract**

A motor-converter with clutch-plates comprising: a motor-shaft (1); at least a motive pulley (25), formed by two trapezoid, opposite half-pulleys (21, 23) idly-mounted on said motor-shaft (1); a chill (7), mounted on said motor-shaft (1) in coaxial alignment with at least one (21) of said half-pulleys, and comprising on the parallel side (20), facing said half-pulley (21), a friction clutch plate (22) and, on the opposite side (20'), a curved surface wall, said chill (7) comprising a lid (4) having a supporting housing (4'); a dragging bell (5) integral with the motor-shaft (1); masses (19) caused to move by said bell (5) and radially sliding along the curved surface wall of the chill (7); at least a driven pulley (26) formed by two trapezoid, opposite half-pulleys (35, 36) mounted on a pin (28), said trapezoid race driven pulley (26) being connected to said motive pulley (25) through a trapezoid belt (24); wherein the pin (28) of the trapezoid race driven pulley (26) is provided with a central threaded hole (29) having a fixed push rod (30) arranged in said hole (29) and where a screw (33) engages, said screw (33) having a tough headed ball (34) in touch with the fixed push rod (30); and in that the motor-shaft (1) is threaded on the free end and it is provided with a locking ring (43) and with a ring nut (48) screwed on said threaded end (49) and acting on said locking ring (43).

## Description

The present invention relates to a motor-converter with plate-type friction clutch.

More particularly, the present invention relates to a continuous motor-converter with plate-type friction clutch of the type comprising two pulleys, one of them being a motive pulley, and the other one a driven pulley, constituted each of two combined and opposed parts having a variable transmission diameter, coupled through a trapezoid belt.

Such type of continuous motor-converter is particularly suitable to be used for small city cars, cars intended for the handicapped, motor-saddles, motor-scooters and the like.

As is known, gear-motors are devices that allow to change the motion transmission ratio value according to the acceleration and, therefore, the number of rotations of the motor-shaft. They comprise at least a motive pulley having a trapezoid race with a variable diameter for two corresponding belts, formed by two trapezoid half-pulleys, opposite, idly-mounted on a co-axial motor-shaft. In coaxial alignment with at least one of said half-pulleys, a chill is mounted that comprises, on the parallel side facing said semi-pulley, a plate -type friction clutch, and, on the opposite side, a wall having a curved surface. Along said walls there are radially sliding, in the centrifugal direction, masses caused to move by an end bell integral with the transmission shaft.

The centrifugal action of the masses causes an axial shifting of the chill which, as a consequence, engages said half-pulley through its plate-type friction clutch. Adjustable elastic means ensure the axial thrust for the realization of said engagement relation. The rotation and axial sliding of said first half-pulley friction drags also the second half-pulley by means of a trapezoid belt. According to the acceleration and therefore the increase in the rotation number of the motor- shaft and the angle speed, the centrifugal force of the masses that move increasingly radially towards the outside increases, causing the maximum radial shift of the chill and the plate-type friction clutch of the coupled half-pulley, with a corresponding "climbing" or shifting towards the periphery of the trapezoid belt along the race formed by the coupling of the opposite half-pulleys. Such climbing or shifting causes a variation in the dragging diameter and, therefore, a continuous variation in the transmission ratio of the motor-converter.

Through the trapezoid belt, the transmission is sent to the trapezoid-race-variable-diameter driven pulley, also formed by two opposite half-pulleys. A motor converter with clutch-plates is known from US-A-2 678 566. Said device has the features of the preamble of claim 1.

The known plate-type friction clutch motor-converters, while being commonly used with satisfactory results from the functional point of view, have some drawbacks that cause the motion transmission to be imperfect and/or require continuous maintenance interventions for the adjustment and or replacement of the parts.

One these drawbacks is due to the fact that the chill with the plate type friction clutch that engages with the idly half pulley, the dragging bell and the related centrifugal expansion masses are cantilever mounted on the motor shaft and rest on the end of said shaft. They cause a flexion of said end which causes the drag thrusting on said half-pulley to be irregular and non orthogonal.

This involves an imperfect transmission of the motion and an irregular consumption of both the plate type friction clutch and the trapezoid transmission belt.

Another drawback lies in that the known motor-converters are devoid of any axial adjustment means able to correctly make up for the clearance between the parts that ensues from the natural wear of the friction clutch material. As wear increases, the axial thrust of the counteracting elastic gears that are calibrated with optimum mean loads decreases. This involves the necessity of replacing the plate-type friction clutch after a specific number of working hours; when, i.e. the axial thrust of the elastic gears is lower than the minimum value necessary for the dragging, even if the residual thickness of the clutches might be still advantageously exploited.

A further drawback lies in that the present motor-converters do not comprise quick means for an easy disassembly for the overhaul and maintenance. The recovery of the clearance ensuing from the progressive wear of the friction clutch takes place through the periodic elimination of thickness, which is a long and laborious operation that requires the disassembly of the whole dragging unit.

Object of the present invention is to obviate the aforesaid drawbacks.

This and other objects that will be obvious thanks to the following description are achieved by means of a motor- converter comprising:
- a motor-shaft;
- at least a trapezoid-race diameter variable motive pulley, formed by two trapezoid, opposite half-pulleys, idly-mounted on said motor-shaft;
- a chill, mounted on said motor-shaft in coaxial alignment with at least one of said half-pulleys, and comprising on the parallel side facing said half-pulley, a friction clutch plate and, on the opposite side, a curved surface wall; said chill comprising a lid having a supporting housing;
- a dragging bell integral with the motor-shaft;
- masses caused to move by said bell and radially sliding in the centrifugal direction along the curved surface wall of the chill; and
- at least a trapezoid-race diameter variable driven pulley formed by two trapezoid, opposite half-pulleys mounted on a pin parallel to the motor-shaft, said driven pulley being connected to said motive pulley through a trapezoid belt;
said motor- shaft comprising an elongated guide whose end is inserted in and supported by said housing, and the dragging bell and the complementary chill being made from light materials having high mechanical characteristics; wherein the pin of the trapezoid race driven pulley is provided with a central threaded hole having a fixed push rod arranged in said hole and where a screw engages, said screw having a tough headed ball in touch with the fixed push rod; and wherein the motor-shaft is threaded on the free end and it is provided with a locking ring and with a ring nut screwed on said threaded end and acting on said locking ring.

The dragging masses may be obtained by co-moulding of a plastic material resistant to wear and high temperatures, on a metal core.

Among the many advantages achieved with the motor-converter of the present invention, we mention the following ones.

In the first place, the axial contact thrust of the plate-type friction clutch against the trapezoid half-pulley of a variable motion transmission, takes place in a perfectly orthogonal correct manner, with a uniform wear of the plate-type friction clutch.

This allows to obtain the maximum exploitation of the thickness of the friction clutch material with the maximum efficiency and less maintenance interventions.

Besides, the use of light and resistant materials for the forming of the bell and the chill, as well as the addition of a further resting point, reduce the load on the terminal part of the motor-shaft and ensure a perfect coaxial and orthogonal alignment of the motor- shaft relatively to the plate-type friction clutch.

The recovery of the wear clearance of the dragging clutch is progressive and can be obtained in an easy and quick manner by means of the axial sliding of the bell, caused by a screwing action and subsequent locking.

The constructive and functional characteristics of the motor-converter of the present invention will be better understood thanks to the following description, wherein reference is made to the figures of the attached drawings, reported only by way of illustrative, non limiting example, and wherein:
Figure 1 shows the schematic view of a cross-section of an embodiment of the motor-converter of the present invention;
Figures 2a and 2b show the detail of the extractor of the driven pulley, respectively in the starting position and during the extraction stage;
Figure 3 shows a schematic view of an enlarged cross-section of the coupling and adjustment region of the thrust on the plate-type friction clutch;
Figure 4 shows a schematic view of an enlarged cross-section of a second embodiment of the coupling and adjustment zone of the thrust of the friction clutch plate, and
Figure 5 shows a schematic view of a cross section of a third embodiment of the motor converter of the present invention.

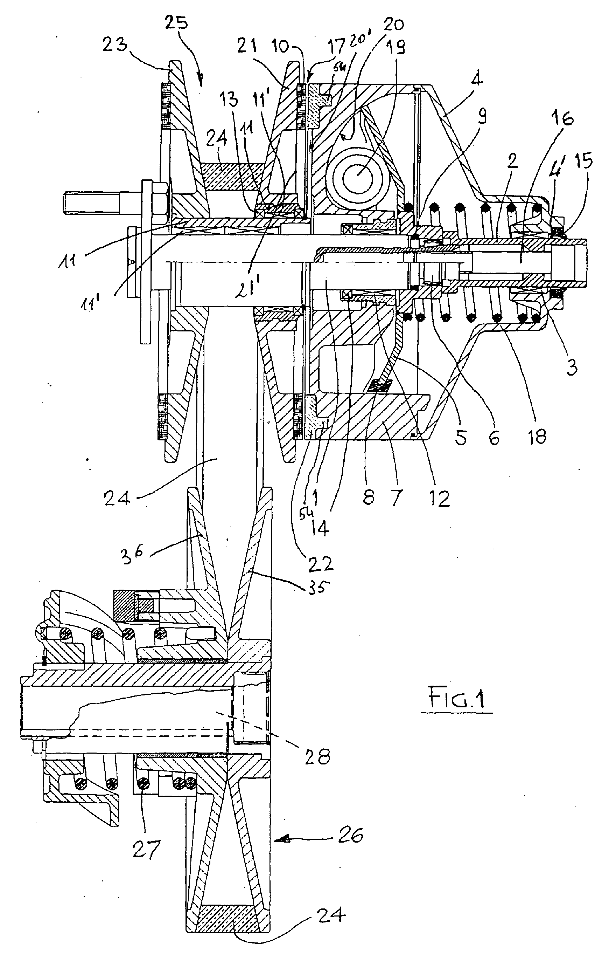

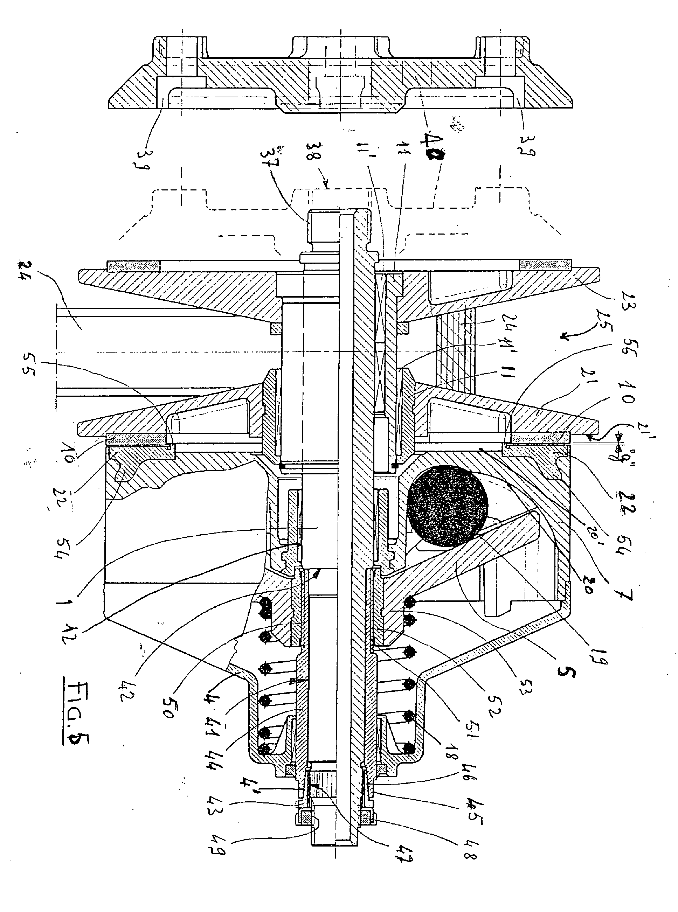

With reference to Figures 1-3, the motor-converter of the present invention comprises a motor-shaft 1, an external chill 7, coaxial and idly mounted by means of sliding and/or translation bearings and/or bushings 12 on said shaft 1, and an external lid 4 fixed to said external chill 7. Lid 4, having preferable a substantially truncated cone shape with the greater base fixed to chill 7 and the smaller base closed, is provided, in the middle of the smaller base, with a housing 4'. An elongated guide 2 is fixed, at one end, to the fixed end of the motor-shaft 1, while at the opposite end, it is supported by a bearing or bushing 3 located in housing 4'.

Chill 7 has a curved internal surface 20 and an opposed flat external surface 20'. A friction clutch plate 22 is tied to the flat external surface 20' of chill 7. A friction clutch ring 10 is fixed, in alignment with the friction plate 22, to the external flat surface 21' of a first trapezoid half-pulley 21, also idly coaxially mounted on the motor-shaft 1 though bushings 11 associated to brasses or bearings 11'.

Its complementary second trapezoid half-pulley 23, also coaxial with shaft 1 and idle with respect to the latter, is coupled and opposed to the same by means of other bushings 11 and bearings 11'. The two half-pulleys 21, 23 form the trapezoid-race motive pulley 25.

A trapezoid-race driven pulley 26, also constituted of a first 35 and a second 36 half-pulley, trapezoid, coupled and opposite, is placed parallel and aligned with respect to the motive pulley 25.

Both half-pulleys 35, 36 are mounted on a pin 28, parallel to the motor-shaft 1, and a spring 27 keeps the two half-pulleys 35, 36 approached and in touch with one another.

A trapezoid transmission belt 24 is placed in the respective trapezoid races of the motive 25 and driven 26 pulleys.

A bell 5, oriented towards the internal surface 20 of said chill 7, is fixed to shaft 1 through a coaxial serrated joint 6 and coupled to said chill 7 by means of peripheral radial sliding blocks 8. This technical feature of fixing the bell 5 to the shaft 1 via a coaxial serrated joint by radial sliding blocks 8 does not form part of the present invention.

A screw 16, screwed at the free end of the motor-shaft 1, keeps the elongated guide 2, together with the dragging bell 5, in engagement and coaxial alignment relation with said shaft 1.

The elongated guide 2, supported at the free end by a bearing or bushing 3, located in housing 4', realizes the support of shaft 1, which allows a homogeneous distribution of the loads and the coaxial alignment between shaft 1 and the elongated guide 2 to be orthogonal between said shaft 1 and lid 4.

The association of guide 2 to the shaft 1 takes place by means of the interposition of several movable shims 9 that, during the use, are progressively eliminated to recover the increase in clearance 17 ensuing from the progressive reduction due the wear of the clutch-ring 10.

The wear compensation in a frictional clutch by movable shims 9 is not within the scope of the present invention.

A counteracting spring 18, coaxial to guide 2 and located on said guide 2 between the dragging bell 5 and the smaller base of lid 4, keeps the dragging bell 5 tensioned and guide-like axially oscillating.

Masses 19, free to move according to radial directions, are located in the room defined by the internal curve surface 20 of chill 7 and the dragging bell 5.

During the working, the rotation speed of shaft 1 is transmitted to the dragging bell 5 and from the latter to chill 7, through the engagement of masses 19 on its internal curved surface 20.

With the motor on and slowly running, the rotation speed is not sufficient to generate a centrifugal force such as to cause the radial sliding towards the outside of masses 19; the latter remain in their resting position, kept standstill by the counteracting spring 18. The half-pulleys 21, 23, being not engaged in any way with the moving chill 7, and being idle with respect to the motor-shaft 1, do not rotate and therefore do not drag the transmission belt 24.

With the acceleration of the motor and the increase in speed of the motor-shaft 1 of the dragging bell 5 and masses 19, the latter are submitted to the action of a corresponding centrifugal force that pushes them radially towards the outside, with a radial climbing motion along the internal curved surface 20 of chill 7.

Therefore, the chill 7 is pushed to slide axially towards the first trapezoid half-pulley 21 of the motive pulley 25. When the friction clutch plate 22 comes in touch and friction relation with the friction clutch-ring 10, the first half-pulley 21 is dragged in the rotary motion. The higher the rotation speed of the motor-shaft 1, the greater the pushing of masses 19 towards the outside, with a greater axial shifting of chill 7 and the first half-pulley 21. The motion is transmitted by friction of the first half-pulley 21 to the transmission belt 24 and from this to the second half-pulley 23. Speed variations cause the variation of the diametric position of the transmission belt 24 along the race of the motive pulley 25, varying the transmission ratio. Each variation causes a complementary modification of the ratio on the driven pulley 26, as the transmission belt 24 modifies also on the same its diametric position, spacing axially the two coaxial complementary half-pulleys 35, 36 that make it up, overcoming the resistance opposed by the counteracting spring 27.

The presence of the elongated guide2 allows the motor-shaft 1 to be supported at its free end on bearing 3 located in housing 4' of lid 4. Such arrangement ensures the necessary orthogonality of the motor-shaft 1 with the friction clutch ring 10. Besides, to ensure such orthogonality, the weights of bell 5 and of the chill 7 are reduced, as such components are made from light materials with high mechanical characteristics. Such a light material may be a plastic material reinforced with fibreglass, carbon fibres or organic fibres having a high tenacity, such as for instance Kevlar fibres. Such reinforced plastic material has mechanical properties suitable for the particular application and relatively low specific weights. By mere way of example, there may be employed reinforced plastic materials comprising 30-45% fibreglass. In particular, the plastic materials reinforced with 30% fibreglass have a density of 1.6 kg/dmc, a traction modulus of 11000 Mpa, a flexion modulus of 10300 Mpa and an ultimate traction stress of 158 MPa. The plastic materials reinforced with 45% fibreglass have about the same density, a traction modulus of 16000 MPa, a flexion modulus of 15200 MPa and an ultimate traction stress 158 MPa. Beside, the reinforced plastic materials have a plastic material-steel friction coefficient of 0.17.

The elongated guide 2 may be of an independent type, as shown in Figure 1; or said guide 2' may be produced integrally with the dragging bell 5, as shown in Figure 4.

All sliding and/or translation bearings and/or bushings 3, 11, 12 are protected with annular gaskets 13, 14, 15.

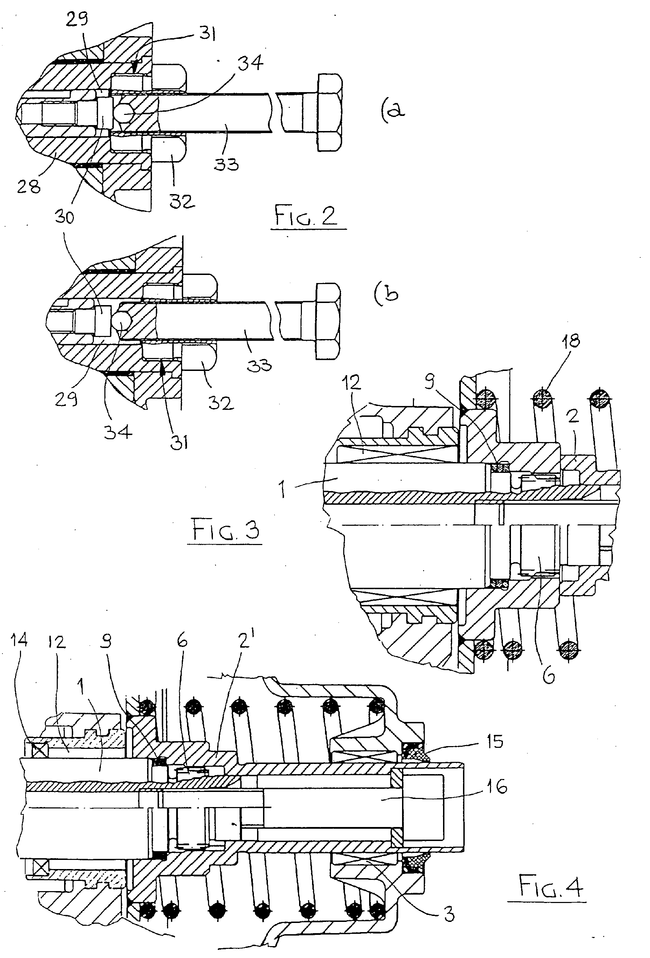

According to the present invention and as shown in Figures 2a and 2b, in order to facilitate the operations of extraction for maintenance reasons of the driven pulley 26, pin 28 comprises a central hole 29 wherein a fixed push rod 30 is positioned. Said hole 29 ends with a threading 31, and a bushing 32 is screwed on said threading 31. Bushing 32 is provided with a central threaded hole where, during the extraction for maintenance, a screw 33 engages that has a tough head ball 34. By bringing the ball 34 in touch with the fixed push rod 30 and going on with the screwing action of screw 33, the desired extraction of pulley 26 is obtained.

As shown in Figure 5, each motor-converter is provided with an adjustment interchangeable flange 40 for the connection of the motor-shaft 1 with the various types of motors (not shown).

Each adjustment flange 40 comprises a coaxial threaded hole 38 and peripheral attachment points 39 for the bolts or the like. The motor-shaft 1 has a threaded terminal 37 which can be screw-coupled with the coaxial threaded hole 38 of flange 40.

In order to prevent shaft 1 from coming out from hole 38 of flange 40 during the working, the threaded coupling is realized by screwing contrary to the rotation direction of the shaft.

The above described adjustable interchangeable connection for various motor type by using an interchangeable flange 40 is not within the scope of the present invention.

With reference to Figure 5, the motor-shaft 1 is produced as an enbloc with the elongated guide 2, and , in correspondence of its end opposite to that coupled to flange 40, is provided with a housing 41, circumscribed by an intermediate beat 42 and a locking ring 43. In said housing 41 a bush 44 is keyed that can be caused to rotate by means of a key applied in special notches 45. The locking ring 43 comprises a bushing having a conical external surface 46 and a straight serrated internal surface 47. Said external conical surface 46 engages with a corresponding conical housing obtained at the end of bushing 44 and said internal serrated surface 47 engages with a corresponding serration obtained on the motor-shaft 1.

The free end 49 of the motor-shaft 1 is threaded and a ring nut 48 is screwed on it. When the ring nut 48 is screwed, it pushes coaxially the locking ring 43 against bushing 44, locking it through the restraining of the two conjugated conical parts.

When the ring nut 48 is unscrewed, it frees said restraining, allowing the rotation of bushing 44 in housing 41.

End 50 of bushing 44, located near to beat 42, is provided with a male threading 51 which couples with a corresponding female threading of a bushing 52 integral with hub 53 of the dragging bell 5.

When the locking ring 43 is slackened, bushing 44 can rotate in its housing 41, causing the rotation of the male threading 51 and the ensuing dragging in the axial direction of bushing 52 and the dragging bell 5; said bushing 52 being engaged and tied to said bell 5 by means of peripheral axial guides. The axially moving bell 5 presses the masses 19 that lean and push in the same direction against external chill 7.

The axial sliding, which is made periodically without having to disassemble any part of the motor-converter, but causing simply bushing 44 to rotate by means of a key that engages with notches 45, allows to periodically restore the optimum clearance (g) between the friction clutch-ring 10 of the half-pulley 21 and the friction plate 22 of chill 7. In this manner, the increase in said clearance which arises from the friction wear of the friction clutch-ring 10 during the working is recovered and the optimum working conditions of the motor-converter are restored.

After each clearance restoring, the locking ring 43 is locked and bushing 44 remains in the position.

According to a preferred embodiment, the friction clutch plate 22, preferably made from cast iron, is fixed in a stable manner and without the possibility of coming out at the external chill 7 by means of an annular back element 54, having the shape of a circular inclined serration.

The fastening is obtained by co-moulding of the aluminium chill on the cast iron friction plate 22. The friction plate 22 is provided, along its internal circumference, with a switch-ring 55 whose function is to prevent the powders due to the friction consumption of the friction plate 22 from falling on the rotating central parts, and to plateharge them towards the outside by centrifugal force.

The switch-ring does not form part of the present invention.

The dragging bell 5 is an enbloc, without weldings, and is preferably obtained by moulding high resistance reinforced plastic materials. During the moulding, the bell 5 is coupled and tied to bushing 52 coupled to bush 44. Such solution avoids weldings and the problems associated to the coaxiality with the motor-shaft 1 and the alignment precision of the inclined planes, improving their coupling with masses 19.

The masses 19 can be constituted of metal inserts enclosed in envelopes from reinforced plastic material.

While the present invention has been described above with reference to some specific embodiments thereof, reported by way of illustrative and non limiting examples, it is obvious that those skilled in the art will be able to introduce various changes and modifications in the light of the above reported description.

## Claims

1. A motor-converter with clutch-plates comprising:
- a motor-shaft (1);
- at least a trapezoid-race-variable-diameter motive pulley (25), formed by two trapezoid, opposite half-pulleys (21, 23), idly-mounted on said motor-shaft (1);
- a chill (7), mounted on said motor-shaft (1) in coaxial alignment with at least one of said half-pulleys (21), and comprising on the parallel side (20) facing said half-pulley (21), a friction clutch plate (22) and, on the opposite side (20'), a curved surface wall; said chill (7) comprising a lid (40) having a supporting housing (4');
- a dragging bell (5) integral with the motor-shaft;
- masses (19) caused to move by said bell (5) and radialy sliding in the centrifugal direction along the curved surface wall of chill (7); and
- at least a trapezoid race, variable diameter driven pulley (26) formed by two trapezoid opposite half-pulley (35, 36) mounted on a pin (28) parallel to the motor-shaft (1); said trapezoid race driven pulley (26) being connected to said motive pulley (25) through a trapezoid belt (24),
wherein the motor-shaft (1) comprises an elongated guide (2) whose end is inserted in and supported by said housing (4'), and the dragging bell (5) and the complementary chill (7) are made from light materials having high mechanical characteristics,
**characterised in that** the pin (28) of the trapezoid race driven pulley (26) is provided with a central threaded hole (29) having a fixed push rod (30) arranged in said hole (29) and where a screw (33) engages, said screw (33) having a tough headed ball (34) in touch with the fixed push rod (30); and **in that** the motor-shaft (1) is threaded on the free end and it is provided with a locking ring (43) and with a ring nut (48) screwed on said threaded end (49) and acting on said locking ring (43).

2. The motor-converter according to claim 1, wherein a bushing (32), provided with a central threaded hole, is screwed on the threading (31) of the hole (29) and the screw (33) engages said central threaded hole.

3. The motor-converter according to claim 1 or 2, wherein the motor-shaft (1) is provided with a housing (41) circumscribed by an intermediate beat (42) and by the locking ring (43) and a rotatable bushing (44) is keyed in said housing (41)

4. The motor-converter according to anyone of the preceding claims,
wherein the locking ring (43) comprises a bushing having a conical external surface (46) and a straight serrated internal surface (47), the end of the bushing (44) is provided with a conical housing, and the motor shaft with a serration; said external conical surface (46) engaging with said conical housing and said internal serrated surface (47) with said serration.

5. The motor-converter according to anyone of the preceding claims,
wherein the free end (49) of the motor-shaft (1) is threaded and a ring nut (48) is screwed on it; said nut (48) pushing coaxialy the locking ring (43) against the bushing (44) when it is screwed.

6. The motor-converter according to anyone of the preceding claims,
wherein the end (50) of the bushing (44) is provided with a male threading (51) coupled to a corresponding female threading of a bush (52) integral with hub (53) of the dragging bell (5).

7. The motor-converter according to claim 6, wherein the bush (52) is engaged and tied to the bell (5) by means of peripheral axial guides.

8. The motor-converter according to anyone of the preceding claims,
wherein the friction clutch plate (22) is made from cast iron and fastened to the external chill (7) by means of an annular back element (54) having the shape of a circular inclined serration.

9. The motor-converter according to claim 8, wherein the chill (7) is made of aluminium and it is co-moulded on the cast iron friction plate (22).

10. The motor-converter according to anyone of the preceding claims,
wherein the light material having high mechanical characteristics is a plastic material reinforced with fiberglass, carbon fibers or high tenacity organic fibres.
